# EUROPEAN PATENT APPLICATION

(11) **EP 3 708 502 A1**
(43) Date of publication of application: **16.09.2020**
(21) Application number: 19208894.6
(22) Date of filing: 13.11.2019
(51) Int. Cl.: B64D 41/00

(54) **RAM AIR TURBINES AND TRANSMISSION SYSTEMS**

(30) Priority: 11.03.2019 US 201916298644
(71) Applicant: Hamilton Sundstrand Corporation, Charlotte, NC 28217-4578 (US)
(72) Inventor: LARSON, Michael E., Rockford, IL 61109 (US); KONICEK, Timothy Scott, Rockford, IL 61114 (US)
(74) Representative: Dehns

(57) **Abstract**

A ram air turbine (RAT) system can include a fluid circuit, a turbine, a shaft connected to the turbine to turn with the turbine, and a hydraulic pump connected (e.g., directly) to the shaft and connected to the fluid circuit to pump fluid within the fluid circuit. The hydraulic pump can be a variable displacement pump, for example (e.g., configured to govern a speed of the shaft and turbine). The hydraulic pump can be used to power and provide speed control to an electric generator.

## Description

### BACKGROUND

### 1. Field

This disclosure relates to ram air turbines and systems.

### 2. Description of Related Art

The primary function of a ram air turbine (RAT) is to provide alternate power to the aircraft at any flight phase during the aircraft's operational profile during emergency situations requiring the RAT. Depending on the specific RAT configuration and size, it will have a turbine, a gearbox, an electric generator or a hydraulic pump, or both a generator and a pump.

Conventionally, a fluid filled, angled gearbox has been used to increase the turbine shaft speed into the generator. Typical gear ratios range from 1:1 to 1:2.5. As the turbine spins up, the full driveline spins with it. This adds inertia to the driveline which increases start time (especially at cold conditions where driveline bearing tare losses and gearbox fluid viscous losses are the highest). Additionally, since the gear ratio is fixed, the governing capability of the system is limited to the turbine.

Such conventional methods and systems have generally been considered satisfactory for their intended purpose. However, there is still a need in the art for improved RATs and systems. The present disclosure provides a solution for this need.

A ram air turbine (RAT) system can include a fluid circuit, a turbine, a shaft connected to the turbine to turn with the turbine, and a hydraulic pump connected (e.g., directly) to the shaft and connected to the fluid circuit to pump fluid within the fluid circuit. The hydraulic pump can be a variable displacement pump, for example (e.g., configured to govern a speed of the shaft and turbine). For example, the hydraulic pump can be a piston pump. Any other suitable pump is contemplated herein.

The system can further include a generator assembly operatively connected to the fluid circuit, wherein the generator assembly is configured to be driven by flow and/or pressure of the fluid in the fluid circuit. The generator assembly can include a hydraulic motor configured to be driven by flow and/or pressure within the circuit. The hydraulic pump can be configured to drive the hydraulic motor with the fluid in the fluid circuit.

The hydraulic motor can include a pump (e.g., configured to operate in reverse). The hydraulic motor can be a constant displacement pump (e.g., a gear pump). Any other suitable pump (e.g., a variable displacement pump) is contemplated herein.

The system can include a hydraulic loop connected to the fluid circuit, wherein one or more hydraulic systems are disposed in fluid communication with the hydraulic loop to be driven by flow and/or pressure in the fluid circuit. The hydraulic pump can be configured to drive the one or more hydraulic systems in fluid communication with the fluid in the fluid circuit. The hydraulic loop can connect upstream of the hydraulic motor and downstream of the hydraulic motor.

In accordance with at least one aspect of this disclosure, a ram air turbine (RAT) can include a turbine, a shaft connected to the turbine to turn with the turbine, and a hydraulic pump connected (e.g., directly) to the shaft and configured to connect to a fluid circuit to pump fluid within the fluid circuit. The hydraulic pump can be any suitable hydraulic pump as disclosed herein (e.g., described above).

In accordance with at least one aspect of this disclosure, a method can include turning a hydraulic pump of a ram air turbine (RAT) with a shaft of the RAT attached to a turbine of the RAT. The method can include pumping fluid with the hydraulic pump to generate fluid flow and/or fluid pressure in a fluid circuit. The method can include driving a generator with the fluid flow and/or fluid pressure. The method can include driving one or more hydraulic systems of an aircraft with the fluid flow and/or fluid pressure. The hydraulic pump used in the method can be a variable displacement pump configured to govern a speed of the RAT, for example.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure; and
Fig. 2 is a schematic diagram of an embodiment of a system in accordance with this disclosure.

### DETAILED DESCRIPTION

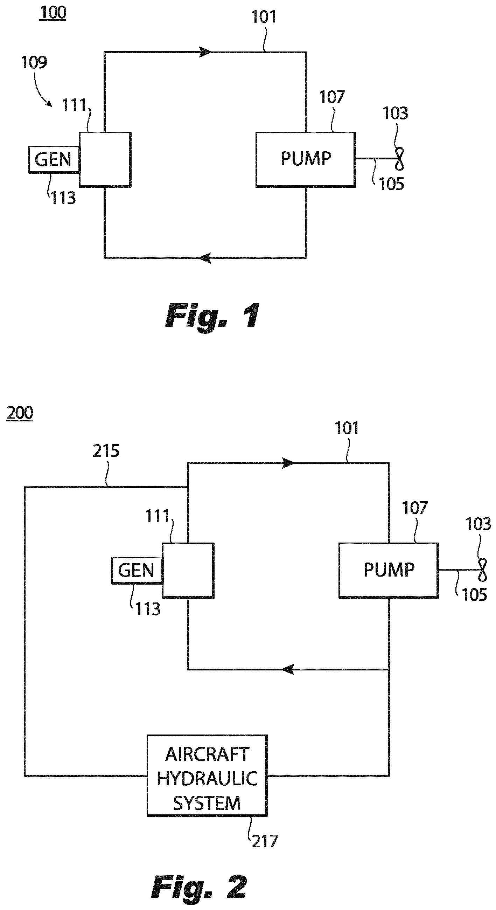

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 100 and is designated generally by reference character 100. Other embodiments and/or aspects of this disclosure are shown in Fig. 2.

A ram air turbine (RAT) system 100 can include a fluid circuit 101, a turbine 103, a shaft 105 connected to the turbine 103 to turn with the turbine 103, and a hydraulic pump 107 connected (e.g., directly) to the shaft 105. The hydraulic pump 107 can be connected to the fluid circuit 101 to pump fluid within the fluid circuit 101.

The hydraulic pump 107 can be a variable displacement pump, for example. The use of a variable displacement pump can govern a speed of the shaft 105 and turbine 103 as a changing input speed into the variable displacement pump changes the output displacement. For example, the hydraulic pump 107 can be a piston pump. Any other suitable pump type (e.g., fix displacement) is contemplated herein as appreciated by those having ordinary skill in the art in view of this disclosure.

The system 100 can further include a generator assembly 109 operatively connected to the fluid circuit 101. The generator assembly 109 can be configured to be driven by flow and/or pressure of the fluid in the fluid circuit 101. The generator assembly 109 can include a hydraulic motor 111 configured to be driven by flow and/or pressure within the circuit 101. The hydraulic pump 107 can be configured to drive the hydraulic motor 111 with the fluid in the fluid circuit 101, for example. The hydraulic motor 111 can be connected to a generator 113 to turn the generator 113 when driven by fluid in the fluid circuit 101 to produce electrical energy.

The hydraulic motor 111 can include a pump (e.g., configured to operate in reverse). The hydraulic motor 111 can be a constant displacement pump (e.g., a gear pump). Any other suitable pump (e.g., a variable displacement pump) is contemplated herein.

Referring additionally to Fig. 2, a system 200 can additionally or independently include a hydraulic loop 215 connected to the fluid circuit 101. One or more hydraulic systems 217 (e.g., any suitable an aircraft hydraulic systems) can be disposed in fluid communication with the hydraulic loop 215 to be driven by flow and/or pressure in the fluid circuit 101. The hydraulic pump 107 can be configured (e.g., sized and/or speed set) to drive the one or more hydraulic systems 217 in fluid communication with the fluid in the fluid circuit 101 (e.g., in addition to driving the generator 113). As shown, in certain embodiments, the hydraulic loop 215 can connect upstream of the hydraulic motor 111 and downstream of the hydraulic motor 111 (e.g., an inlet upstream and an outlet downstream). While certain embodiments are shown having a hydraulic motor, it is contemplated that the shaft 105 can be mechanically connected to a generator (e.g., through a gearbox) while the hydraulic pump 107 governs a speed of the shaft, and thus the speed of the mechanically connected generator. Any other suitable arrangement is contemplated herein.

In accordance with at least one aspect of this disclosure, a ram air turbine (RAT) can include a turbine 103, a shaft 105 connected to the turbine to turn with the turbine 103, and a hydraulic pump 107 connected (e.g., directly) to the shaft 105 and configured to connect to a fluid circuit 101 to pump fluid within the fluid circuit 101. The hydraulic pump 107 can be any suitable hydraulic pump 107 as disclosed herein (e.g., a variable displacement pump as described above). In certain embodiments, the RAT can include and/or be mechanically connected to a generator to mechanically turn the generator to produce electrical energy while the hydraulic pump is connected to a fluid circuit to govern a speed of the RAT and generator. Any other suitable features (e.g., one or more gear boxes) for the RAT are contemplated herein.

In accordance with at least one aspect of this disclosure, a method can include turning a hydraulic pump of a ram air turbine (RAT) with a shaft of the RAT attached to a turbine of the RAT. The method can include pumping fluid with the hydraulic pump to generate fluid flow and/or fluid pressure in a fluid circuit. The method can include driving a generator with the fluid flow and/or fluid pressure. The method can include driving one or more hydraulic systems of an aircraft with the fluid flow and/or fluid pressure. The hydraulic pump used in the method can be a variable displacement pump configured to govern a speed of the RAT, for example. The hydraulic motor of the generator assembly could also be a variable displacement pump type. In certain embodiments, one side can be fixed (e.g., a gear pump), and the other side can be variable.

In certain embodiments, a pump directly coupled to the turbine can create a hydraulic pump pressure which can drive a generator. In certain embodiments, this can allow governing of the generator (e.g., by using at least one variable displacement pump as the hydraulic pump and/or the hydraulic motor) and allow output that is in a narrower frequency band. For example, as disclosed above, the hydraulic pump can be a variable displacement pump, e.g., a piston pump, that can inherently cause governing. In certain embodiments, the speed can be set so that it operates at max displacement, for example. Certain embodiments can also allow direct drive of one or more hydraulic systems as well as driving the generator. Certain embodiments can prevent losses from otherwise having to convert hydraulic energy to electricity.

Embodiments can be used in aircraft, for example. Embodiments can replace the existing gear set with a hydrostatic transmission or be added to the RAT if a gearbox (e.g., an angled gearbox). A gearbox transmission can provide a secondary governing feature to the RAT system, for example. Embodiments can allow for a tighter output shaft speed range and thus, a tighter frequency band output from the generator. Embodiments can save weight by removing electrical devices and/or reducing electrical device size on the aircraft because electrical systems can be designed to operate in a narrower frequency band. Additionally, a portion of the hydraulic pump output can be routed to the aircraft hydraulic system.

As disclosed above, embodiments can utilize a hydrostatic transmission in the RAT. The hydrostatic transmission can be driven by the turbine shaft and the pump output can be routed to drive a generator and/or aircraft hydraulics. The hydrostatic transmission can replace the gearbox of existing RATs and can allow the generator to be placed essentially anywhere space allows within the RAT envelope. In the case of an electric RAT, the pump can act as another governor to help maintain a more constant output frequency. If a gearbox is not used and the hydrostatic pump is coupled to the turbine shaft, a planetary gear set can be added to increase or decrease the speed into the pump.

The use of a hydrostatic transmission on a RAT can provide tighter frequency band for electric RATs, allow electric devices to be smaller/lighter due to a narrow frequency band (e.g., within about 5% in certain embodiments), provide faster start-up by eliminating fluid viscous losses on gear set, allow for a smaller gearbox (e.g., 1:1 gear ratio) if still required for layout, provide hydraulic power to the aircraft, eliminate the gearbox entirely in certain cases, and allow relocation of the generator away from the turbine in a non-deploying portion of the RAT thereby reducing the moment of inertia during deployment and thus reducing deployment loads seen by the actuator and RAT structure.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A ram air turbine, RAT, comprising:
a turbine (103);
a shaft (105) connected to the turbine to turn with the turbine; and
a hydraulic pump (107) connected to the shaft and configured to connect to a fluid circuit to pump fluid within the fluid circuit.

2. The RAT of claim 1, wherein the hydraulic pump is a variable displacement pump.

3. The RAT of claim 2, wherein the hydraulic pump is a piston pump.

4. The system of any preceding claim, further comprising the fluid circuit.

5. The system of claim 4, further comprising a generator assembly (109) operatively connected to the fluid circuit, wherein the generator assembly is configured to be driven by flow and/or pressure of the fluid in the fluid circuit.

6. The system of claim 5, wherein the generator assembly includes a hydraulic motor (111) configured to be driven by flow and/or pressure within the circuit, wherein the hydraulic pump is configured to drive the hydraulic motor with the fluid in the fluid circuit.

7. The system of claim 6, wherein the hydraulic motor is a pump, and preferably wherein the hydraulic motor is a constant displacement pump.

8. The system of claim 4, further comprising a hydraulic loop (215) connected to the fluid circuit, wherein one or more hydraulic systems (217) are disposed in fluid communication with the hydraulic loop to be driven by flow and/or pressure in the fluid circuit, wherein the hydraulic pump is configured to drive the one or more hydraulic systems in fluid communication with the fluid in the fluid circuit.

9. The system of claim 8, wherein the hydraulic loop connects upstream of the hydraulic motor and downstream of the hydraulic motor.

10. A method, comprising:
turning a hydraulic pump of a ram air turbine, RAT, with a shaft of the RAT attached to a turbine of the RAT.

11. The method of claim 10, further comprising pumping fluid with the hydraulic pump to generate fluid flow and/or fluid pressure in a fluid circuit.

12. The method of claim 11, further comprising driving a generator with the fluid flow and/or fluid pressure.

13. The method of claim 12, further comprising driving one or more hydraulic systems of an aircraft with the fluid flow and/or fluid pressure.

14. The method of any of claims 10 to 13, wherein the hydraulic pump is a variable displacement pump configured to govern a speed of the RAT.
